# EUROPÄISCHE PATENTSCHRIFT

(11) **EP 3 446 466 B1**
(45) Veröffentlichungstag und Bekanntmachung des Hinweises auf die Patenterteilung: **04.03.2020**
(21) Anmeldenummer: 16724625.5
(22) Anmeldetag: 19.05.2016
(51) Int. Cl.: H04L 29/08, H04J 3/06

(54) **VERFAHREN ZUM SCHNELLEN REKONFIGURATION VON GM CLOCKS IM TSN NETWORK MITTELS EINER EXPLIZITEN TEARDOWN NACHRICHT**
METHOD FOR FAST RECONFIGURATION OF GM CLOCKS IN THE TSN NETWORK BY MEANS OF AN EXPLICIT TEARDOWN MESSAGE
PROCÉDÉ DE RECONFIGURATION RAPIDE D'HORLOGES GM DANS LE RÉSEAU TSN AU MOYEN D'UN MESSAGE TEARDOWN EXPLICITE

(43) Veröffentlichungstag der Anmeldung: 27.02.2019
(73) Patentinhaber: Siemens Aktiengesellschaft, 80333 München (DE)
(72) Erfinder: CHEN, Feng, 90537 Feucht (DE); SCHMITT, Jürgen, 90766 Fürth (DE)
(86) Internationale Anmeldenummer: PCT/EP2016/061269
(87) Internationale Veröffentlichungsnummer: WO 2017/198304

(56) Entgegenhaltungen:
- FENG CHEN ET AL: "Support of Automatic Configuration in Working Clocks with Redundancy ; as-chen-goetz-sync-redundancy-1115-v01", IEEE DRAFT; AS-CHEN-GOETZ-SYNC-REDUNDANCY-1115-V01, IEEE-SA, PISCATAWAY, NJ USA, Bd. 802, Nr. v01, 11. November 2015 (2015-11-11), Seiten 1-15, XP068101381, [gefunden am 2015-11-11]

## Beschreibung

Time-Sensitive Networking (TSN) bezeichnet eine Reihe von Standards, an denen die Time-Sensitive Networking Task Group (IEEE 802.1) arbeitet.

Die sich in der Standardisierung befindlichen Standards definieren Mechanismen zur Übertragung von Daten über Ethernet-Netzwerke. Ein Großteil der Projekte definiert dabei Erweiterungen des Bridging-Standards IEEE 802.1Q. Diese Erweiterungen adressieren vor allem die Übertragung mit sehr geringer Übertragungslatenz und hoher Verfügbarkeit. Mögliche Anwendungsbereiche sind konvergente Netzwerke mit Echtzeit-Audio/Video-Streams sowie insbesondere Echtzeit-Kontrollstreams, welche z. B. im Automobil oder in Industrieanlagen zur Steuerung verwendet werden.

Redundanz ist das zusätzliche Vorhandensein funktional gleicher oder vergleichbarer Ressourcen eines technischen Systems, wenn diese bei einem störungsfreien Betrieb im Normalfall nicht benötigt werden. Ressourcen können z. B. redundante Informationen, Motoren, Baugruppen, komplette Geräte, Steuerleitungen und Leistungsreserven sein. In der Regel dienen diese zusätzlichen Ressourcen zur Erhöhung der Ausfall-, Funktions- und Betriebssicherheit. In der industriellen Kommunikation ist Redundanz daher weit verbreitet, insbesondere bei Kommunikationsnetzen in der Industrie, die eine besonders kurze "Switch-over Time" im Falle eines Fehlers benötigen, also die Zeit die benötigt wird, im Falle eines Fehlers einer Komponente einen Wechsel (geplant oder ungeplant) von einem Primärsystem zu einem Standby-System durchzuführen.

Die TSN Task Group arbeitet derzeit an der Revision des gPTP, also des generalized Precision Time Protocol (IEEE 802.1 AS-2011). Eine der wesentlichen Änderungen in der überarbeiteten Version besteht in der Hinzufügung einer Redundanz-Unterstützung um die Anforderungen der Echtzeit-Kommunikation in industriellen Anwendungen für Hochverfügbarkeits Zeitsynchronisation.

Redundanz kann dabei in gPTP (generalized Precision Time Protocol, IEEE 802.1AS-2011) Netzen auf verschiedene Arten erreicht werden.

Ein PTP-Netz besteht aus kommunizierenden Uhren. Von diesen teilnehmenden Geräten wird über den Best Master Clock (BMC)-Algorithmus dasjenige ermittelt, das die exakteste Zeit angibt. Dieses Gerät dient als Referenzuhr und wird als Grandmaster Clock bezeichnet.

Im Betrieb verteilt jeweils der Master das Zeitsignal an seine Slaves zur Ermittlung der Verzögerung (engl. delay). Dazu wird eine Zeitmarke in Form einer Sync Message von der Master-Referenzuhr an den Slave versandt, der die Empfangszeit der Zeitmarken an seiner eigenen Zeit bestimmt. Zudem sendet der Slave wiederholt eine Delay Request Message an den Master, deren Empfangszeit beim Master wiederum als Delay Response Message an den Slave zurückgeschickt wird.
Aus jeweils den Differenzen der vier Zeitmarken werden das Master-to-Slave Delay und das Slave-to-Master Delay bestimmt. In diesen Werten ist also jeweils die Differenz der beiden Uhren und die Nachrichtenlaufzeit mit entgegengesetzten Vorzeichen enthalten. Der Mittelwert der beiden Größen liefert somit den gerichteten Offset zum Master, welcher schließlich zur Synchronisation der Slave-Uhr benutzt wird.
Die Kompensation der Laufzeiten stützt sich dabei auf die Annahme, dass Hin- und Rückweg von Synchronisierungsnachrichten gleiche mittlere Laufzeiten haben und sich mit der Zeit nur langsam ändern. Die Annäherung des Slaves an die Referenzzeit des Master erfolgt kontinuierlich über ein Regelverfahren. Insbesondere werden so Rücksprünge in der Slave-Zeit vermieden.

Eine Möglichkeit ist nun die sogenannte "Master Redundancy", die zwei aktive GrandMasters (GM) vorsieht. Hierbei wird eine synchronisierte Zeit parallel publiziert, so dass bei Ausfall einer der beiden GM Uhren das Netz immer noch durch die andere Uhr weiter synchronisiert werden kann. Dieses Verfahren setzt die Auswahl von zwei Uhren als redundante GMs voraus, wobei typischerweise die "bessere" Uhr als primary GM und die zweitbeste Uhr als sofort einsetzbarer Ersatz (hot standby) GM fungiert.

Basierend auf dem Rapid Spanning Tree Protocol (RSTP) legt der BMCA eine einzelne GM Uhr fest, indem er einen Baum aufspannt mit der Wurzel bei der besten Uhr. Den existierenden BMCA zu Verwenden um zwei GMs zu ermitteln wird allerdings als fehleranfällig angesehen und ist auch nicht automatisierbar, weil zwei BMCA Instanzen auf verschienenen gPTP Domänen laufen müssen und Netzmanagement zur Vorkonfiguration von Uhr-Attributen benötigt wird um zu garantieren, dass es sich bei den ausgewählten GMs in den verschiedenen Domänen nicht um die gleiche Uhr handelt.

Ein kürzlich eingereichte Eingabe bei einem IEEE 802.1 Standardisierungsmeetings zu gPTP präsentiert ein neues Protokoll, welches im Folgenden BMCA+ genannt werden soll. BMCA+ unterstützt Auswahl und Wartung von zwei BestMaster Clocks auf einer einzelnen gPTP Domäne. Sie benutzt sogenannte peerto-peer Announce+ Nachrichten welche die Best Master Auswahl-Informationen für die beste und die zweitbeste Uhr. Hierbei verwendet BMCA+ keinen Spanning Tree Algorithmus wie BMCA basierend auf RSTP. BMCA+ wendet die Sequenznummer (SN) und einen Haltezeit Mechanismus an um Schleifen zu vermeiden und Fehler zu erkennen. Dynamische Rekonfiguration als Reaktion auf Systemänderungen wird ebenso unterstützt.

Anders als die auf IS-IS (**I**ntermediate **S**ystem to **I**ntermediate **S**ystem Protocol) basierenden Methode das einen kompletteen Satz von globaler Information in den lokalen Datenbanken erhält, unterstützt der BMCA+ Algorithmus den Austausch und die Speicherung ausschließlich von ausgewählten Ergebnissen der aktuell zwei besten Uhren. Der Vorteil ist der reduzierte Datentraffic und verbesserte Skalierbarkeit. Allerdings verursacht das Datenaustausch Schema des BMCA+ ein Problem bei der Stabilität in der GM Rekonfiguration wenn eine aktuelle GM aufgrund von Änderungen der Uhren-Attribute wieder zur untergeordneten Uhr zurück gestuft wird und eine neue GM Uhr ermittelt werden muss um die vorherige GM zu ersetzten. In diesem Fall hat das BMCA+ einen Informations-Konflikt, welcher in einer übermäßig langen Rekonfigurations-Zeit, die viel länger ist als in anderen Fällen.

In dem Foliensatz "Support of Automatic Configuration in Working Clocks with Redundancy", IEEE Draft Bd 802., Nr. V01, November 2015, Autoren Feng Chen, Franz-Josef Götz, Jürgen Schmitt, http://www.ieee802.org/1/files/public/docs2015/aschen-goetz-sync-redundancy-1115-v01.pdf wird das zugrunde liegende Setting mit BMCA+ und Announce+ messages beschrieben, sowie die Durchführung einer Konfiguration (d. h. ersten Initialisierung) der GM in einem Kommunikationsnetz der genannten Art.

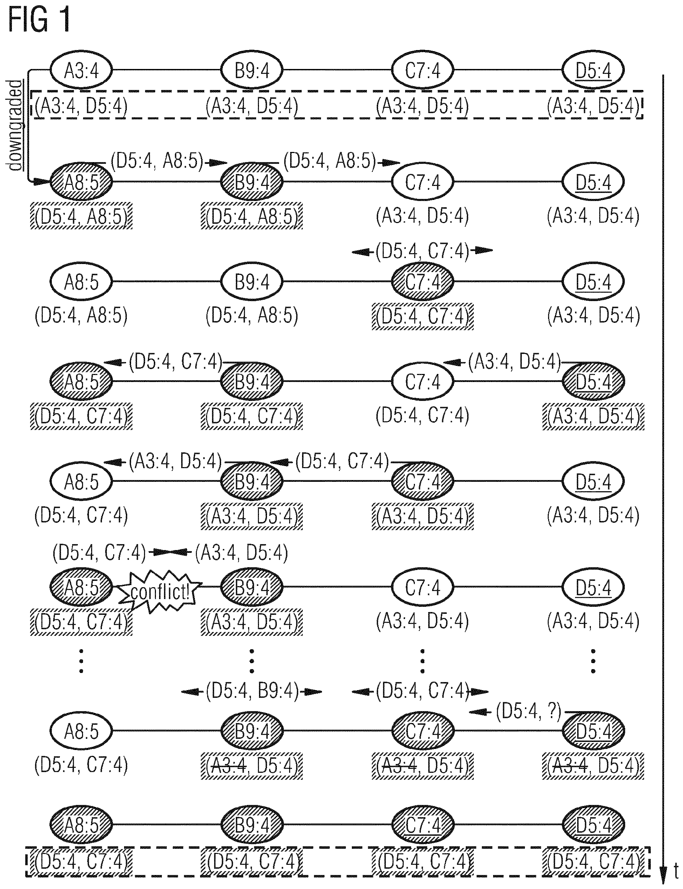

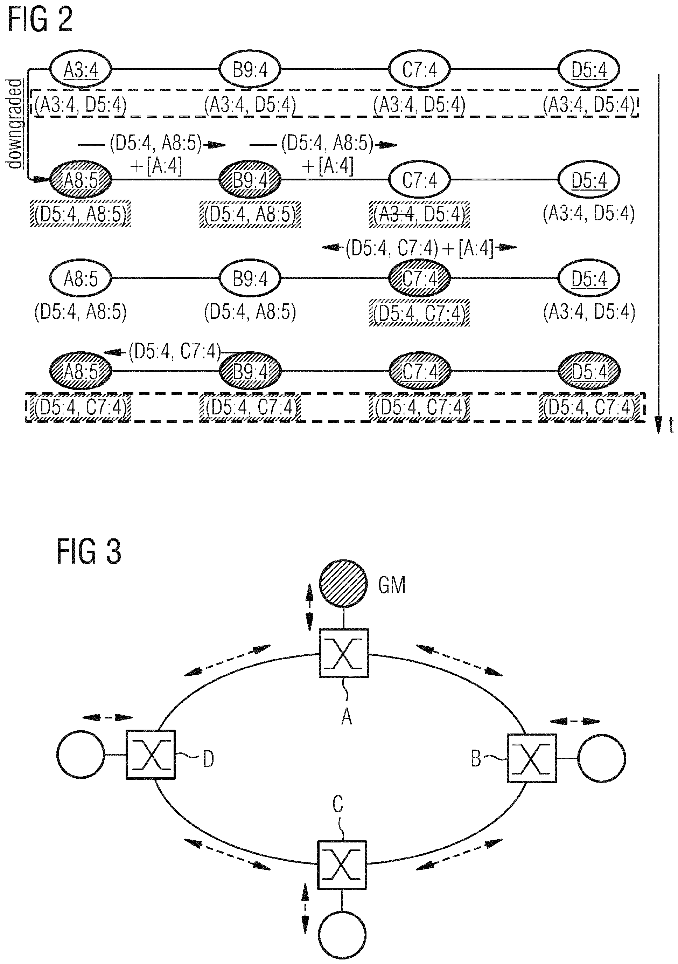

Die Figur 1 zeigt ein Beispiel eines Durchlaufs des BMCA+ Protokolls auf einem Netzwerk mit vier linear angeordneten Knoten zur Auswahl der Besten und des Zweitbesten Uhr als redundante GMs. Der Pfeil t zeigt dabei den Ablauf der Zeit an. Die horizontalen Pfeile zeigen das Versenden von Nachrichten zwischen den Netzelementen, inclusive der in der Nachricht enthaltenen Informationen. Die GM Neuauswahl wird durch die aktuell beste Uhr auf dem Netzknoten A getriggert, der seinen Prioritätswert von 3 auf 8 senkt. Die Knoten sind dabei in der Figur 1 und 2 wie folgt beschriftet: (A3:4) bedeutet beispielsweise Uhr A mit Priorität 3 und Sequenznummer 4. A sendet eine Ankündigungs-Nachricht (Announce+) mit A8 als zweitbeste GM Uhr. Nach Erhalt der Änderung muss jeder Knoten lokal eine Neuauswahl treffen und diese neuen Selektions-Ergebnisse propagieren.

Anders als die Knoten A und B, die A8 weiterhin als zweitbeste GM Uhr ansehen, wird Knoten C A8 mit seiner eigenen Uhr (C7:4) in der aktuellen GM Liste und eine Ankündigungsnachricht ohne A8 versenden. Diese Transaktion provoziert den nächsten Nachbarn D, der nichts von der Änderung von A weiss. Das Ergebnis ist, dass die alten Werte von (A3:4) die in D gespeichert sind, nicht zeitnah überschrieben gelöscht werden und daher die Chance haben, die Ergebnisse der Neuauswahl zu überschreiben. Diese Daten-Inkonsistenz fällt auf, sobald A die alte Information in der Announce+ Nachricht von B findet. Basierend auf dem aktuellen BMCA+ Protokoll kann A jedoch nur an B antworten, in dem er die aktuellen Ergebnisse basierend auf BMCA+ erneut versendet. Damit ist der Konflikt aber nicht behoben. Als Ergebnis des Konflikts zwischen der veralteten und der neuen Information derselben Uhr sich kann die GM Neuauswahl nicht etablieren, solange die alte Information (A3:4) noch im Netz verfügbar ist. Dieser Deadlock wird derzeit durch einen Timeout abgefangen, was allerdings länger dauert als gewünscht.

Wie in der Figur 1 gezeigt startet in der aktuellen Lösung später ein Timeout Ereignis diese Reinigungsaktion für jeden Netzknoten der noch die veraltete Information (A3:4) gespeichert hat und die Netzknoten dazu bringen im aktuellen Beispiel den Netzknoten C endgültig als neue GM Uhr zu wählen. Das setzt voraus, dass die Zeit so lange dauert wie die Hold-Time, dessen Wert üblicherweise mehrere Sekunden beträgt. Einen sehr viel kleineren Wert für die Hold-Time auszuwählen, beispielsweise hunderte von Millisekunden, kann hilfreich sein bei der Reduzierung der Rekonfigurationszeit, allerdings geht das auf Kosten von deutlich erhöhten Datentraffic in Form von periodischen Announce+ Nachrichten, die übertragen werden.

Es ist Aufgabe der Erfindung, das beschriebene Problem zu lösen. Diese Aufgabe wird gelöst durch ein Verfahren gemäß den Merkmalen des unabhängigen Patentanspruchs 1 und einen Vorrichtungsanspruch gemäß Patentanspruch 6.

Das Beispiel aus Figur 1 zeigt, dass der Schlüssel zur Lösung des Problems die Durchführung eines Netzweiten Säuberung der der veralteten Informationen um sicher zu stellen, dass veraltete GM Informationen mit einer höheren Priorität neue Informationen nicht überschreiben können. Das aktuelle BMCA+ vertraut auf dem Hold-Time Mechanismus um die GM Rekonfiguration schnell auf allen Knoten durchzuführen.

Die Aufgabe wird gelöst durch die Einführung eines konkreten Advertizing Schemas für das BMCA+ Protokoll um die beschriebene Instabilität während der GM Rekonfigurationsperiode zu beheben. Die Methode benutzt eine Announce+ Nachricht um eine extra Benachrichtigung, die eine Uhr mit veralteter Information anzeigt und die neue Information im kompletten Netzwerk verbreitet. Das Ziel ist alle Uhren darüber zu informieren, dass veraltete Informationen vorhanden sind, so dass die GM Rekonfiguration schnell und ohne extra Konflikte durchgeführt werden kann. Diese sogenannte "teardown" Notification ist vorgesehen für den Fall wenn eine aktuelle beste Uhr (also entweder erst- oder zweitbeste GM Clock) ihre Priorität herabstuft, um eine nachgeordnete Uhr zu werden. In anderen Fällen, wenn die beste (oder zweitbeste) Uhr seine Priorität erhöht oder eine nachgeordnete Uhr ihre Attribute ändert, ist das Versenden einer Notification nicht erforderlich, da die beschriebenen Probleme hier nicht auftreten werden.

Figur 2 beschreibt den Advertising Prozess, basierend auf derselben Netzwerkkonfiguration wie in Figur 1 dargestellt. Die herabgestufte Master Clock A muss zunächst eine eine Information verschicken (tear down), welche die ClockID und die letzte Serial Number SN vor der Änderung enthält. Danach wird eine neue Announce+ Nachricht versendet, welche die geänderten Auswahl-Ergebnisse (D5:4, A8:5) und die Tear-Down Information (A:4) enthält.
Anstatt den kompletten Satz an Informationen in dieser Nachricht zu versenden, z. B. (A3.4) wird in der Tear-Down Information das Minimum an Information übermittelt, welches zur Auswahl der überflüssigen Uhren Information ausreicht, also ClockID und SN.
Die Tear-Down Nachricht kann als TLV (type length value) übertragen werden. Das Type-Length-Value-Format (TLV; deutsch Typ-Länge-Wert) wird in Netzwerkprotokollen und Dateiformaten genutzt, um eine variable Anzahl von Attributen in einer Nachricht respektive Datei zu übertragen.
Ein Attribut wird durch folgendes Tripel (Type, Length, Value) am Ende der Announce+ Nachricht übermittelt:
Type (Typ): bestimmt den Typ des Attributes
Length (Länge): bestimmt die Übertragungslänge des Attributes
Value (Wert): enthält den eigentlichen Wert des Attributes.

Bei Empfang einer Announce+ Nachricht mit der Tear-Down Nachricht muss jede Uhr zunächst eine Reinigungs-Aktion in der lokalen Datenbank durchführen und dann die Auswahl der besten Uhr durchführen. Jede Uhr muss also die empfangene Tear-Down Nachricht in der Announce+ Nachricht zum nächst gelegenen Netzknoten weiter leiten zusammen mit den aktualisierten Auswahl-Daten. Das Weiterleiten einer Tear-Down Benachrichtigung erfolgt bedingungslos, unabhängig davon ob eine zwischenliegende Uhr erkennt, dass nach der Aktualisierung der Werte die jenige Uhr, die als herunter gestuft gilt, weiterhin als eine der beiden besten Uhren angenommen wird. Zum Beispiel hat in Figur 2 der Netzknoten C ein neues Auswahl-Ergebnis ohne A, aber reicht immer noch die Werte (A3:4) an den Nachbar weiter. Dieses Verhalten stellt sicher, dass die Tear-Down Nachricht von allen Uhren im Netz gesehen wird, so dass die überflüssige Information aus den Netz und allen Netzelementen komplett entfernt werden kann.

Die Übertragung der Announce+ Nachricht von BMCA+ nutzt einen SN-Basierten Link-lokalen Informationsaustauschmechanismus um die Information über Mitteilung der besten Uhr im Netzwerk im Netzwerk zu zirkulieren, was ebenso angewendet wird um die Tear-Down Notification zu advertisen. Die Port-basierte Schleifenverhinderungs-Aktion stellt sicher, dass die selbe Tear-Down Nachricht, gekennzeichnet durch das Paar "ClockID und SN", über den selben Datenport nur einmal übertragen wird.

Um die Zuverlässigkeit weiter zu erhöhen, kann eine Uhr, die die neue Benachrichtigung über einen ihrer Ports erhalten hat, diesen Erhalt durch Senden einer Announce+ Nachricht an den ursprünglichen Sender bestätigen, welcher die gleiche Announce Nachricht enthält.
Mit einer solchen Bestätigungsnachricht bestätigen sich beide Netzelemente an den Enden der Verbindung gegenseitig, dass sie benachrichtigt wurden und nun das Advertisen der Tear-down Nachricht in den folgenden Announce+ Übertragungen über den gleichen Link einstellen.
Die Bestätigungsnachrichten in Announce+ sind in der Figur 2 nicht enthalten.

Wie in Figur 2 gezeigt, wird die Announce+ Nachricht mit der Tear-Down Notification durch das gesamte Netzwerk propagiert. Die überflüssige Best-Clock Information wird aus jeder Uhr stufenweise gelöscht. Vorteilhafterweise wird der beschriebene Vorgang duetlich schneller als der mit dem Stand der Technik wie in Figur 1 beschrieben, durchgeführte. Die Zeit für die GM Rekonfiguration wird damit extrem reduziert.

Figur 3 zeigt einen alternativen Netzaufbau, um klar zu stellen, dass das in Figur 1 und 2 dargestellte Netz nur beispielhaft zu verstehen ist.

## Patentansprüche

1. Verfahren zur Rekonfiguration der Information bezüglich redundanten GrandMaster Clock Uhren in einem generalized Precision Time Protocol gPTP Netz durch Versenden einer Tear-Down Nachricht von einem Netzelement (A, B, C, D) zu einem benachbarten Netzelement, welche zur Änderung der Information bezüglich zumindest einer der redundanten GrandMaster Clocks (A, D) in den Netzelementen des gPTP Netzes führt, wobei die Tear-Down Nachricht eine erste Announce+ Nachricht ist, welche als Information nur die ClockID und die SerialNumber der GrandMaster Clock Uhr vor der Änderung enthält, wobei danach eine neue Ankündigungs- Nachricht versendet wird, welche eine zweite Announce+ Nachricht ist und geänderte Ergebnisse bezüglich einer Auswahl einer neuen besten GrandMaster Clock und die Information aus der Tear-Down Nachricht enthält, und nach dem Empfang der Tear-Down Nachricht die Information zu den betroffenen GrandMaster Clocks in der lokalen Datenbank des empfangenden Netzelements entfernt und die Auswahl der neuen besten GrandMaster Clock Uhr durchgeführt wird.

2. Verfahren gemäß Patentanspruch 1, wobei die Tear-Down Nachricht im Type Length Value TLV Format übertragen wird .

3. Verfahren gemäß einem der vorherigen Patentansprüche, wobei die Ankündigungs-Nachricht über jeden Daten-Port des Netzelements nur einmal übertragen wird.

4. Verfahren gemäß einem der vorherigen Patentansprüche, wobei der Empfang der Ankündigungs-Nachricht mit einer Bestätigungsnachricht an den Sender quittiert wird.

5. Verfahren gemäß Patentanspruch 4, wobei die Bestätigungssnachricht eine Kopie der empfangenen Nachricht enthält.

6. Netzelement welches in ein Kommunikationsnetz eingebunden ist wobei das Kommunikationsnetz gemäß IEEE 802.1 TSN arbeitet, wobei dass das Netzelement in der Lage und eingerichtet ist, gemäß einem der Verfahrensansprüche zu arbeiten.

## Claims

1. Method for reconfiguring the information relating to redundant grand master clocks in a generalized Precision Time Protocol gPTP network by sending a teardown message from one network element (A, B, C, D) to an adjacent network element, which teardown message changes the information relating to at least one of the redundant grand master clocks (A, D) in the network elements of the gPTP network, wherein the teardown message is a first Announce+ message which, as information, contains only the clock ID and the serial number of the grand master clock before the change, wherein thereafter a new announcement message is sent, which is a second Announce+ message and contains changed results relating to a selection of a new best grand master clock and the information from the teardown message, and, after receiving the teardown message, the information relating to the affected grand master clocks is removed from the local database of the receiving network element and the selection of the new best grand master clock is carried out.

2. Method according to Patent Claim 1,
wherein
the teardown message is transmitted in the type-length-value TLV format.

3. Method according to one of the preceding patent claims,
wherein
the announcement message is transmitted only once via each data port of the network element.

4. Method according to one of the preceding patent claims, wherein
the reception of the announcement message is acknowledged with a confirmation message to the transmitter.

5. Method according to Patent Claim 4,
wherein
the confirmation message contains a copy of the received message.

6. Network element which is incorporated in a communication network, wherein the communication network operates according to IEEE 802.1 TSN, wherein
the network element is able and set up to operate according to one of the method claims.

## Revendications

1. Procédé destiné à la reconfiguration de l'information relative à des heures d'horloges grand-maître redondantes dans un réseau à protocole de temps de précision généralisé gPTP par le biais de l'envoi d'un message tear-down d'un élément de réseau (A, B, C, D) à un élément de réseau voisin, lequel message conduit à la modification de l'information relative à au moins une des horloges grand-maître redondantes (A, D) dans les éléments de réseau du réseau gPTP, dans lequel le message tear-down est un premier message Announce+ qui ne contient en tant qu'information que l'identifiant d'horloge (ClockID) et le numéro de série de l'heure d'horloge grand-maître avant la modification, dans lequel un nouveau message de notification est ensuite envoyé, lequel est un second message Announce+ et contient des résultats modifiés relatifs à une sélection d'une nouvelle et meilleure horloge grand-maître et l'information issue du message tear-down, et
après la réception du message tear-down l'information concernant l'horloge grand maître concernée est enlevée de la banque de données locale de l'élément de réseau récepteur et la sélection de la nouvelle et meilleure heure d'horloge grand maître est opérée.

2. Procédé selon la revendication 1, dans lequel le message tear-down est transmis au format type-longueur-valeur TLV.

3. Procédé selon l'une des revendications précédentes, dans lequel le message de notification n'est transmis qu'une seule fois via chaque port de données de l'élément de réseau.

4. Procédé selon l'une des revendications précédentes, dans lequel la réception du message de notification est confirmée à l'expéditeur avec un message de confirmation.

5. Procédé selon la revendication 4, dans lequel le message de confirmation contient une copie du message reçu.

6. Elément de réseau qui est intégré dans un réseau de communication, dans lequel le réseau de communication fonctionne selon la norme IEEE 802.1 pour les réseaux TSN, dans lequel l'élément de réseau est en mesure de et conçu pour fonctionner selon l'une des revendications de procédé.
